# EUROPEAN PATENT SPECIFICATION

(11) **EP 3 751 500 B1**
(45) Date of publication and mention of the grant of the patent: **03.05.2023**
(21) Application number: 20161876.6
(22) Date of filing: 09.03.2020
(51) Int. Cl.: G06Q 30/02

(54) **SYSTEM AND METHOD FOR TECHNOLOGY RECOMMENDATIONS**
SYSTEM UND VERFAHREN FÜR TECHNOLOGIEEMPFEHLUNGEN
SYSTÈME ET PROCÉDÉ POUR DES RECOMMANDATIONS DE TECHNOLOGIE

(30) Priority: 14.06.2019 IN 201921023760
(43) Date of publication of application: 16.12.2020
(73) Proprietor: Tata Consultancy Services Limited, Maharashtra (IN)
(72) Inventor: Khaderbad, Nagendra Vijaya Kumar, 500034 Hyderabad, Telangana (IN); Panda, Simanchala, 751024 Bhubaneswar, Odisha (IN); Gudipudi, Harikishore, 500034 Hyderabad, Telangana (IN); Sreenivasiah, Satish, 560009 Bangalore, Karnataka (IN)
(74) Representative: Goddar, Heinz J.

(56) References cited:
- US-A1- 2012 036 103

## Description

### CROSS-REFERENCE TO RELATED APPLICATIONS AND PRIORITY

The present application claims priority from Indian patent application no. 201921023760, filed on June 14, 2019.

### TECHNICAL FIELD

The disclosure herein generally relates to technology recommendations, and, more particularly, to system and method for technology recommendations.

### BACKGROUND

With growth of information technology, various technologies have emerged that facilitate in enhancing capabilities of software products. The software products (or technology assets) have to be enhanced to keep them updated with emerging technologies. Typically, the enhanced software products are implemented with newer versions of technologies and are launched as different versions.

With launch of a latest version of software asset, the older versions may become obsolete. However, it is difficult to keep track of various technologies or technological components embodied in a software product every time a new version of the software product is released, due to the fact that the current pace of change of technology is quiet fast as compared to the pace of lifecycle development of a software product. In addition, once the software product is deployed in production, many other technical challenges may come up due to evolving technologies. Such technical challenges may include but are not limited to, security issues arising due to underlying technology components, one or more technology components no longer supported, license information modified, and so on. Moreover, while creating an architecture, many of the times, a suitable technological component may not be selected to meet organization's IT goal.

US 2012/036103 A1 discloses an apparatus, and related method, for identifying one or more association variables. The apparatus includes at least one processor, at least one memory, and at least one program module stored in the memory configured to be executed by the processor. The program module includes instructions for selecting a subset of temporal onsets in a set of temporal onsets, instructions for determining a statistical relationship between the subset and a pattern of occurrence of a variable, and instructions for identifying the variable as an association variable in accordance with the statistical relationship. The subset includes one or more first temporal onsets corresponding to one or more instances of an event, and the set of temporal onsets includes the subset of temporal onsets and one or more second temporal onsets corresponding to one or more instances of a reoccurrence event.

### SUMMARY

Embodiments of the present disclosure present technological improvements as solutions to one or more of the above-mentioned technical problems recognized by the inventors in conventional systems. In one embodiment, a processor-implemented method according to independent claim 1 is provided.

In another aspect, a system according to independent claim 6 is provided.

In yet another aspect, one or more non-transitory machine readable information storage mediums according to independent claim 11 are provided.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary networking environment implementing a system for technology recommendations according to some embodiments of the present disclosure.
FIG. 2 is a block diagram of a system for technology recommendations according to some embodiments of the present disclosure.
FIG. 3 is a flow diagram illustrating a method for technology recommendations in accordance with some embodiments of the present disclosure.

### DETAILED DESCRIPTION OF EMBODIMENTS

Typically, an enterprise may deploy various technology assets for self or for provisioning to clients. As used herein the term 'technology asset' include, for example, products and platforms, solutions, and code based assets. The 'products and platforms' may include configurable functional system or application capable of delivering pre-defined business results, functions, processes and outcomes. A 'solution' may refer to customizable and/or configurable functional system or application that is capable of being implemented along with other products, solutions or custom development. A 'code based asset' is a software asset that has market positioning. A code based asset refers to an asset without any User Interface or services wrapper around it. A code based asset is a skeleton reusable asset which can be plugged into other large assets or a part of a code library.

Generally, upon deployment of software assets in production, various issues may not be tracked in real-time. Such issues may include but are not limited to security issues arising due to underlying technology components, technology component no longer supported, license information of the technology component altered, and so on. Moreover, while creating architecture, at times a suitable technology component may not be selected as per organization's IT goal. In other words, typically there do not exists a central repository for that can be accessed by a software asset owner to identify the information associated with potential issues correctly, in a timely manner and act on it on time or consume the information meaningfully.

The embodiments disclosed herein overcome the aforementioned challenges and other limitations in management of technology components associated with technology assets. For example, the embodiments provide method and system for enabling technology recommendations corresponding to various technology components associated with various technology assets. The system derives multiple mapping matrices that map multiple technology assets with various technology components associated with said assets. Such mapping matrices are indicative of relative relevance of various technology factors (such as technology sustenance, common use, resource availability, performance, security, automation factor, and so on) with respect to asset factors associated with each of the technology assets. In the following description, the technology factors are referred to as first set of factors and the asset factors are referred to as second set of factors.

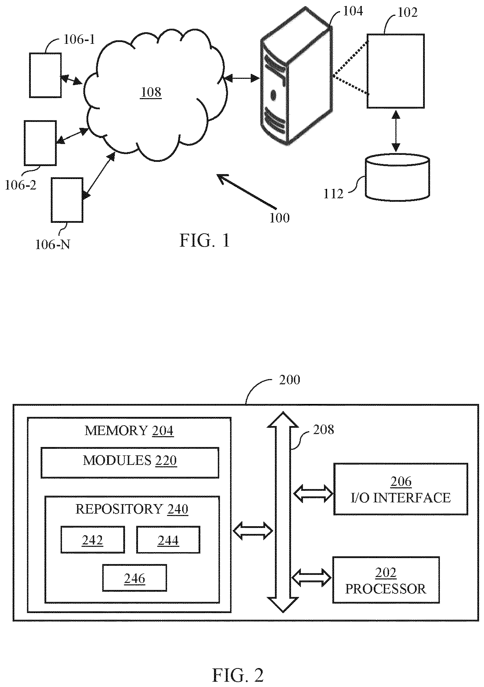

In an embodiment, the disclosed system overcomes the technical challenge of non-availability of real-time access of information pertaining to various technology components embodied in various technology assets by deriving data associated with the technology factors and the asset factors in real-time using natural language processing (NLP) rules. The use of NLP for deriving the technology factors and the asset factors facilitates the system to assign scores to technology assets against each of the technology components. Such scores are utilized for providing recommendations pertaining to the issues associated with the technology assets. These aforementioned and other aspects of the disclosed embodiments will be explained further in detail with reference to FIGS. 1-3.

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Referring now to the drawings, and more particularly to FIGS. 1 through 3, where similar reference characters denote corresponding features consistently throughout the figures, there are shown preferred embodiments and these embodiments are described in the context of the following exemplary system and/or method.

FIG. 1 illustrates a network environment 100 implementing a system 102 for technology recommendations, according to an embodiment of the present subject matter. In an embodiment, the system 102 provides recommendations for technology advisory associated with various technology assets. Hereinafter 'the recommendations for the technology advisory' may be referred to as 'technology recommendations'. Herein, for the purpose of description the term 'technology asset' may refer to an asset or a software product embodying multiple technology components. Such software products may include products and platforms, solutions, and code based assets which are configured to be sold to users and users pay for license as a result of which the users are allowed to use such software products. Alternatively, the aforementioned technology asset may include products and platforms, solutions, and code based assets that may allow users to buy subscriptions thereof. For the brevity of this description, the term 'technology asset' may be referred to as `asset'. In an embodiment, the system 102 may be embodied in a server in form of a computer system.

Although the present disclosure is explained considering that the system 102 is implemented on a server, it may be understood that the system 102 may also be implemented in a variety of computing systems, such as a laptop computer, a desktop computer, a notebook, a workstation, a cloud-based computing environment and the like. It will be understood that the system 102 may be accessed by multiple contributors through one or more user devices 106-1, 106-2... 106-N, collectively referred to as user devices 106 hereinafter, or applications residing on the user devices 106. Examples of the user devices 106 may include, but are not limited to, a portable computer, a personal digital assistant, a handheld device, a Smartphone, a tablet computer, a workstation and the like. The user devices 106 are communicatively coupled to the system 102 through a network 108. Herein, the users of the user-devices 106 may include contributors, moderators, and so on.

In an embodiment, the network 108 may be a wireless or a wired network, or a combination thereof. In an example, the network 108 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 108 may include a variety of network devices, including routers, bridges, servers, computing devices, storage devices. The network devices within the network 108 may interact with the system 102 through communication links.

As discussed above, the system 102 may be implemented in a computing device 104, such as a hand-held device, a laptop or other portable computer, a tablet computer, a mobile phone, a PDA, a smartphone, and a desktop computer. The system 102 may also be implemented in a workstation, a mainframe computer, a server, and a network server. In an embodiment, the system 102 may be coupled to a data repository, for example, a repository 112. The repository 112 may store data processed, received, and generated by the system 102. In an alternate embodiment, the system 102 may include the data repository 112.

Further, as illustrated in FIG. 1, the network environment 100 supports various connectivity options such as BLUETOOTH^{®}, USB, ZigBee and other cellular services. The network environment enables connection of devices 106 such as Smartphone with the server 104, and accordingly with the database 112 using any communication link including Internet, WAN, MAN, and so on. In an exemplary embodiment, the system 102 is implemented to operate as a stand-alone device. In another embodiment, the system 102 may be implemented to work as a loosely coupled device to a smart computing environment. The components and functionalities of the system 102 are described further in detail with reference to FIG. 2.

FIG. 2 illustrates a block diagram of a system 200 for technology recommendations, in accordance with an example embodiment. The system 200 may be an example of the system 102 (FIG. 1). In an example embodiment, the system 200 may be embodied in, or is in direct communication with the system, for example the system 102 (FIG. 1).

The system 200 includes or is otherwise in communication with one or more hardware processors such as a processor 202, at least one memory such as a memory 204, and an I/O interface 206. The processor 202, memory 204, and the I/O interface 206 may be coupled by a system bus such as a system bus 208 or similar mechanism. The I/O interface 206 may include a variety of software and hardware interfaces, for example, a web interface, a graphical user interface, and the like. The I/O interface 206 may include a variety of software and hardware interfaces, for example, interfaces for peripheral device(s), such as a keyboard, a mouse, an external memory, a camera device, and a printer. Further, the I/O interface 206 may enable the system 102 to communicate with other devices, such as web servers and external databases. The I/O interface 206 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 206 may include one or more ports for connecting a number of computing systems with one another or to another server computer. The I/O interface 206 may include one or more ports for connecting a number of devices to one another or to another server.

The hardware processor 202 may be implemented as one or more microprocessors, microcomputers, microcontrollers, digital signal processors, central processing units, state machines, logic circuitries, and/or any devices that manipulate signals based on operational instructions. Among other capabilities, the hardware processor 202 is configured to fetch and execute computer-readable instructions stored in the memory 204.

The memory 204 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 204 includes a plurality of modules 220 and a repository 240 for storing data processed, received, and generated by one or more of the modules 220. The modules 220 may include routines, programs, objects, components, data structures, and so on, which perform particular tasks or implement particular abstract data types.

The repository 240, amongst other things, includes a system database 242 and other data 244. The other data 244 may include data generated as a result of the execution of one or more modules in the modules 220.

In an embodiment, the system 200 is associated with an asset repository. The asset repository include data associated with a plurality of technology assets. In an example embodiment, the asset repository may be embodied in the repository for example repository 112 of FIG. 1. Alternatively, the asset repository may be embodied in a cloud and may be accessible to the system 102 via one or more communication interfaces, including wired and wireless interfaces. In an example scenario the technology assets may be assets belonging to an enterprise and may be stored in an internal repository belonging to the enterprise.

In an embodiment, the asset repository may include a single source of reference for registry of details for the plurality of technology assets. In an embodiment, the details of the technology assets may be stored systematically in the asset repository. Said details of the plurality of technology assets may include, but are not limited to, intellectual property (IP) assets associated with the technology assets, including for example, patents, trademarks, copyrights registration and IP assets that may be used under any licensing or service agreements. The asset repository may provide an integrated view of IP assets associated with the technology assets. It will be understood that the asset repository is embodied in the system 200. For example, the asset repository may be represented by numeral 246 in the system 200 (FIG. 2). In alternate embodiments, the asset repository may be stored outside the system 200 and may be communicable coupled to the system 200 via a communication interface.

In an embodiment, the system 200 identifies a plurality of technology components from the details of the technology assets obtained from the asset repository. In an embodiment, the system 200 access the asset repository and extract metadata associated with asset therefrom to identify the details of the plurality of technology components.

Each technology component of the plurality of technology components is associated with a first set of factors. The first set of factors associated with a technology component may refer to those factors which may be considered while deciding to retain, modify, replace or remove the technology component in a technology asset. Examples of first set of factors include, but are not limited to, sustenance factor, common use factor, resource availability factor, performance factor, security factor, artificial intelligence (AI) factor, cloud factor, Big Data factor, and automation factor.

Herein, the 'sustenance factor' associated with a technology component refer to an indication of sustenance or longevity of a technology associated with said technology component. The sustenance factor for a technology component may assume a higher value if the technology associated therewith is predicted to be lasting for a long time, than the sustenance factor for a technology component for which the is predicted to be lasting for a shorter duration. The `common use factor' for a technology component refer to extent of use of said technology component or technology associated thereof in the assets stored in the asset repository, or otherwise. The 'resource availability factor' refer to current availability of human resources and skill levels for the specific technology The `performance factor' refer to the relative performance aspect of the technology as per analysts' reports The 'security factor' refer to Relative strength in security aspects as per analysts report The `artificial intelligence (AI) factor' refer to relative suitability for AI based assets and prominence of use in AI initiatives as per analysts' reports. The 'cloud factor' refer to ease of deployment of the technology component in a cloud environment. The 'Big Data factor' refer to relative suitability of the technology for Big data scenarios as per analyst's reports. The 'automation factor' refer to the level of automation associated with the technology component.

In an embodiment, the system 200 interprets and ranks the first set of factors corresponding to each of the plurality of technology components by using a technology scoring model (TSM). The TSM obtains a first source data associated with the plurality of technology components from a first plurality of sources in order to interpret and rank the first set of factors. The first source data is obtained from a first plurality of sources. In an example embodiment, the first plurality of sources include, but are not limited to, survey data obtained from one or more surveys, social media data, analyst reports and incident data obtained corresponding to the first set of factors. Herein, the survey data may be obtained from various internal and external sources such as online and offline surveys. Similarly, the incident data may be obtained from various internal sources or from external sources including feedback websites, and so on.

The system 200 assigns a first ranking to each factor of the first set of factors corresponding to each of the plurality of technology components. The first ranking assigned to each of first set of factors is indicative of prominent area of advantage of the technology in that order. For example, security is strength of OracleTM DB, whereas performance is more prominent in MongoDBTM and so on. The system 200 ranks an factor from amongst the first set of factors based on the Natural language processing (NLP) of the first source data associated with a technology component from amongst the plurality of technology components. In an embodiment, the ranking of the factors includes identifying positive instances of a technology associated with the technology component in the first source data. The system then creates an index of a count of the positive instances of the factor and synonyms thereof. Further, the system 200 conducts a context analysis and a sentiment analysis on the positive instance identified for the factor corresponding to the technology component, and ranks the factor based on the context analysis and the sentiment analysis. An example of ranking of a factor, for example a sustenance factor is described below.

Considering sustenance factor as the factor, the TSM may interpret sustenance factor by obtaining source data from the first plurality of sources. For example, for interpreting the sustenance factors, the TSM may obtain source data indicating expected longevity of a technology component from one or more survey conducted online or offline, and/or from social media and/or various analyst reports available online or offline, and incident data specific to the sustenance factor. Herein, incident data may refer to data pertaining to incidents associated with technology for assets in production, testing and market news analysis related to said technology and version. News about release of roadmap, next version plan is positive event in scoring sustenance factor, whereas absence of roadmap data and no version release for say more than six months may contribute to negative score in sustenance factor. The system 200 performs NLP on the source data to identify positive instances of the sustenance/longevity of the sustenance factor associated with the technology component in the first source data. The system 200 extracts subjective information from words, sentence, features, documents, expressions etc. in the first source data by performing NLP thereon, and creates an index of a count of the positive instances of the sustenance factor and synonyms thereof. The system conducts a context analysis and a sentiment analysis on the positive instance identified for the factor corresponding to the technology component. The system 200 performs the sensitivity analysis by classifying the polarity of a given text in the words, sentence, features, documents, expressions, and so on to determine whether the expressed opinion in the text is positive, negative or neutral. Additionally, the system 200 conducts an analysis such as beyond polarity analysis for sentiment classification to determine at emotional states such as 'sad', `happy', and so on. The context analysis may be performed with respect to enterprise environment deployment or small scale deployment of the said technology. Based on the context analysis and the sentiment analysis, the system 200 ranks the sustenance factor.

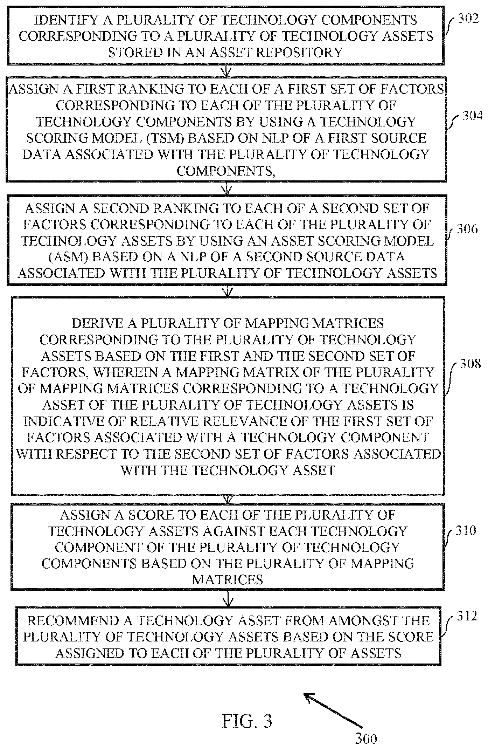

In an embodiment, the system 200 ranks the first plurality of factors corresponding to each of the plurality of technology components by assigning the first ranking. Herein, the first ranking is relative ranking assigned to each of the first set of factors based on the natural language processing of first source data for each of the first set of factors. For instance, in an example scenario, sentiment analysis on durability of technology component may be assumed week or less than 20%, if the score - score of 1 to 2; sentiment of durability is medium, between 20% to 50% - score of 3 to 5; and sentiment of durability may be assumed strong or greater than 50%, score of 6 to 9. An example of relative ranking of the first set of factors corresponding to the plurality of technology components is described further with reference to FIG. 3.

Each of the plurality of technology assets is associated with a second set of factors. The second set of factors associated with a technology asset may refer to those factors which may affect usability and deployment of the technology asset. Examples of second set of factors include, but are not limited to, mission criticality factor, performance factor, security factor, data privacy factor, maintainability factor, artificial intelligence (AI) factor, cloud factor, big data factor, and automation factor.

Herein, the `mission criticality factor' associated with a technology asset refer to the condition that the referenced technology asset has to be in a working state all the time. The sustenance factor for a technology component may assume a higher value if the technology associated therewith is predicted to be lasting for a long time, than the sustenance factor for a technology component for which the is predicted to be lasting for a shorter duration. The `performance factor' refers to response time requirement of the technology asset. The 'maintainability factor' refers to difficulty factor in maintenance. The 'security factor' refers to the consideration of whether the technology asset is prone to attacks (such as hacking). The `data privacy factor' refers to privacy requirement of the technology asset. The `artificial intelligence (AI) factor' refers to usage of technology for AI purpose. The `cloud factor' refers to ease of deployment of the technology asset in a cloud environment. The 'Big Data factor' refers to need for embodying big data technology with the technology asset. The 'automation factor' refers to a level of automation aspect in the technology asset.

The system assigns a second ranking to each of a second set of factors corresponding to each of the plurality of technology assets. In an embodiment, the system 200 interprets and assigns second ranks to the second set of factors corresponding to each of the plurality of technology assets by using an asset scoring model (ASM). The ASM obtains a second source data associated with the plurality of technology assets from a second plurality of sources in order to interpret and rank the second set of factors. In an example embodiment, the second plurality of sources include, but are not limited to, survey data obtained from one or more surveys such as asset surveys, social media data, asset documentation and intellectual property (IP) safe reports associated with the assets, obtained corresponding to the second set of factors. Herein, the survey data may be obtained from various internal and external sources such as online and offline surveys. The IP safe reports may include update on safety aspects of the assets with respect to IP associated with the asset. For instance, the IP safe reports for a technology asset may include information regarding activities such as open source license compliance, third party license compliance, copyright verification, freedom to operate analysis, security vulnerability testing, patent protection and portfolio analysis for the asset, trademark registration; software product development (SPD) including architecture review assessment, security assessment, performance assessment and usability compliance, deployment readiness assessment, user experience assessment; and so on pertaining to said technology asset.

The system 200 assigns a second ranking to each factor of the second set of factors corresponding to each of the plurality of technology assets. The second ranking assigned to each of the second set of factor is indicative of indicative of importance of ASM factor for a specific asset in decreasing order.

The system 200 ranks an factor from amongst the second set of factors based on the Natural language processing (NLP) of the second source data associated with a technology asset from amongst the plurality of technology assets. In an embodiment, the ranking of the factors includes identifying positive instances of a technology associated with the technology assets in the second source data. The system then creates an index of a count of the positive instances of the second factor and synonyms thereof. Further, the system 200 conducts a context analysis and a sentiment analysis on the positive instance identified for the second factor corresponding to the technology asset, and obtains a score for the factor based on the context analysis and the sentiment analysis.

In an embodiment, the system 200 assigns score to the second plurality of factors corresponding to each of the plurality of technology components by assigning the second ranking. Herein, the second ranking is relative ranking assigned to each of the second set of factors based on the natural language processing of second source data for each of the second set of factors. For instance, in an example scenario, sentiment analysis on the need for continuous operation of asset, the technology asset may be assumed week (less than 40%), if the score - score of 1 to 2; sentiment of continuous operation is medium (between 40% to 70% - score of 3 to 5; and sentiment of continuous operation may be assumed strong or greater than 70%, score of 6 to 9. An example of relative ranking of the second set of factors corresponding to the plurality of technology assets is described further with reference to FIG. 3.

The system 200 compares the score obtained by the context analysis and the sentiment analysis with an interpretation of asset survey results for the second plurality of factors. Herein, asset survey results refer to results of a survey performed to determine relative relevance of second plurality of factors. The survey may be done via an online mode and the results of the survey are analyzed and interpreted by the system 200. The analysis of the survey is performed by using NLP techniques. In an embodiment, a sentiment analysis on the survey reveal opinion of asset owners on the importance of ASM factors. An example of ranking of a factor, for example, mission criticality factor is described below.

Considering mission criticality factor as the second factor, the ASM may interpret mission criticality factor by obtaining source data from the second plurality of sources. For example, for interpreting the mission criticality factor, the ASM may obtain source data indicating need for continuous operation of the technology from one or more surveys conducted online or offline, and/or from social media and/or various analyst reports available online or offline, and IP safe reports, other documentation pertaining to technology assets, and so on. The system 200 performs NLP on the second source data to identify positive instances of the mission criticality factor associated with the technology asset in the second source data. The system 200 extracts subjective information from words, sentence, features, documents, expressions etc. in the second source data by performing NLP thereon, and creates an index of a count of the positive instances of the mission criticality factor and synonyms thereof. The system 200 conducts a context analysis and a sentiment analysis on the positive instance identified for the factor corresponding to the technology asset. The system 200 performs the sensitivity analysis by classifying the polarity of a given text in the words, sentence, features, documents, expressions, and so on to determine whether the expressed opinion in the text is positive, negative or neutral. Additionally, the system 200 conducts an analysis such as 'beyond polarity analysis' for sentiment classification to determine emotional states such as 'sad', `happy', and so on. Based on the context analysis and the sentiment analysis, the system 200 assigns a score to the mission criticality factor. Herein, context refers to enterprise scenario for instance, large companies or large number of customers or standalone deployment on cloud and so on.

The system 200 further performs interpretation of the asset survey results for the second plurality of factors and compares said interpretation with the scores of respective factors.

In an example scenario, the system assigns second ranking to each of the second set of factors as follows. Herein, it will be noted that the sentiment score influences first predefined score. In case there is a contradiction, the correction may happen in favor of the sentiment. If it is determined that the sentiment score for a factor in survey is more and the assigned score is less, the sentiment be given priority and the score is increased based on a sentiment range. If it is determined that the sentiment score for any factor reflects the score, then the second ranking be assigned based on the score. If it is determined that the sentiment for the factor is poor, but score is more, the sentiment score be given priority and the score is decreased by sentiment range.

After assigning the first ranking to each of the first set of factors, and second ranking to each of the second set of factors, the system 200 derives a plurality of mapping matrices corresponding to the plurality of technology assets based on the first and second set of factors and a natural language processing of a third source data. A mapping matrix of the plurality of mapping matrices corresponding to a technology asset of the plurality of technology assets is indicative of relative relevance of the first set of factors associated with a technology component with respect to the second set of factors associated with the technology asset. An example of a mapping matrix is described further with reference to FIG. 3.

Herein, the third source data is obtained from a third plurality of sources. The third source data include results of survey conducted for the plurality of technology assets. Said surveys are indicative of opinions of asset owners pertaining to technology and/or assets. Additionally, the third source data includes the first ranking and the second ranking assigned to the first set of factors and the second set of factors, respectively, and ASM factor ranking assigned to the plurality of technology assets. The system 200 performs the natural language processing of the information obtained from the third plurality of sources. In an embodiment, the natural language processing of the information obtained from the third plurality of sources includes identifying positive instances of technology components and the technology assets in the third source data. The system 200 then creates an index of a count of the positive instances of the technology components and the technology assets, and synonyms thereof. Further, the system 200 conducts a context analysis and a sentiment analysis based on the identified positive instances identified to derive a plurality of mapping matrices corresponding to the plurality of technology components/assets.

Based on the plurality of mapping matrices, the system 200 assigns a mapping score to each of the plurality of technology assets against each technology component of the plurality of technology components. The system recommends a technology asset from amongst the plurality of technology assets based on the mapping score assigned to each of the plurality of assets. An example of assignment of mapping score the technology assets is described further with reference to FIG. 3.

Referring now to FIG. 3, a flow diagram of a method 300 for technology recommendations is described, in accordance with an example embodiment. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communication network. The order in which the method 300 is described is not intended to be construed as a limitation, and any number of the described method blocks can be combined in any order to implement the method 300. Furthermore, the method 300 can be implemented in any suitable hardware, software, firmware, or combination thereof. In an embodiment, the method 300 depicted in the flow chart may be executed by a system, for example, the system 102 of FIG. 1. In an example embodiment, the system 102 may be embodied in an exemplary computer system.

Referring collectively to FIG. 3, in the illustrated embodiment, the method 300 is initiated at 302 when a plurality of technology components corresponding to a plurality of technology assets are identified. In an embodiment, details of or information corresponding to the plurality of technology assets be stored in an asset repository.

Herein, a technology asset assumed to be associated with a plurality of technology components. As described with reference to FIG. 2, a first ranking to each of a first set of factors corresponding to each of the plurality of technology components by using the TSM. The TSM ranks the first set of factors based on a Natural language processing of a first source data associated with the plurality of technology components. The first set of factors are denoted as TSM1, TSM2, TSM3, TSM4, TSM5, TSM6, TSM7, TSM8, and TSM9 (hereinafter referred to as TSM1-TSM9). An example of ranking of the first set of factors is illustrated in a table I. In the example of Table I, the technology components are shown to include Oracle JDK 10.0, Open JDK 8.0, Python 3.7.2, and Python 2.7. Further, Table I shows the values of first ranks to the first set of factors TSM1-TSM9. Herein, the first ranks assigned to the TSM1-TSM9 are relative ranks.

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

**Table I**

| TECHNOL OGY AND VERSION | TSM 1 | TSM 2 | TSM 3 | TSM 4 | TSM 5 | TSM 6 | TSM 7 | TSM 8 | TSM 9 |
|---|---|---|---|---|---|---|---|---|---|
| ORACLE JDK 10.0 | 7 | 4 | 7 | 8 | 8 | 3 | 4 | 4 | 3 |
| OPEN JDK 8.0 | 4 | 7 | 7 | 7 | 5 | 3 | 4 | 4 | 3 |
| PYTHON 3.7.2 | 7 | 6 | 8 | 5 | 4 | 6 | 4 | 8 | 7 |
| PYTHON 2.7 | 0 | 5 | 7 | 4 | 4 | 7 | 4 | 8 | 7 |

At 306, a second ranking is assigned to each of the second set of factors corresponding to each of the plurality of technology assets by using the ASM. The ASM ranks the second set of factors based on a Natural language processing of a second source data associated with the plurality of technology assets. The second set of factors are denoted as ASM1, ASM2, ASM3, ASM4, ASM5, ASM6, ASM7, ASM8, and ASM9 (hereinafter referred to as ASM1-ASM9). An example of ranking of the first set of factors is illustrated in a table II. In the example of Table II, the technology assets are shown to include DiNC 3.0.2 and HealthCraft 3.2. Further, Table II shows the values of scores assigned to the second set of factors ASM1-ASM9.

**Table II**

| ASSET AND VERSION | AS M1 | AS M2 | AS M3 | AS M4 | AS M5 | AS M6 | AS M7 | AS M8 | AS M9 |
|---|---|---|---|---|---|---|---|---|---|
| DINC 3.0.2 | 8 | 6 | 4 | 5 | 5 | 4 | 5 | 4 | 7 |
| HEALTHCR AFT 3.2 | 4 | 4 | 7 | 6 | 6 | 3 | 6 | 7 | 3 |

The system further assigns second ranks to the second set of factors ASM1-ASM9. For example Table III illustrates example ranks assigned to the second set of factors ASM1-ASM9 corresponding to the technology bassets DiNC^{™} 3.0.2 and HealthCraft^{™} 3.2.

**Table III**

| ASSET AND VERSION | AS M1 | AS M2 | AS M3 | AS M4 | AS M5 | AS M6 | AS M7 | AS M8 | AS M9 |
|---|---|---|---|---|---|---|---|---|---|
| DINC 3.0.2 | 2 | 3 | 4 | 5 | 6 | 7 | 8 | 9 | 1 |
| HEALTHCR AFT 3.2 | 6 | 7 | 9 | 3 | 4 | 8 | 5 | 1 | 3 |

At 308, a plurality of mapping matrices corresponding to the plurality of technology assets are derived based at least on the first ranking of the first set of factors and the second ranking of the second set of factors. Herein, a mapping matrix of the plurality of mapping matrices corresponding to a technology asset of the plurality of technology assets is indicative of relative relevance of the first set of factors associated with a technology component with respect to the second set of factors associated with the technology asset. In an embodiment, a mapping matrix is derived by reading the ranking (i.e. the first rankings) for the technology asset (from Table II) and map the factors from amongst the first set of factors (TSM1-TSM9) which closely match with factors from amongst the second set of factors (ASM1-ASM9) as high ranked factors. In an embodiment, additionally, the system receives an input indicative of positive identification of linkage between the first and the second set of factors. Said input obtained from a natural language processing of a third source data obtained from a third plurality of sources. In an embodiment, the third plurality of sources may include survey conducted online or offline. For example, as previously discussed, the opinion survey on level of dependency of TSM factors on ASM factors at level of specific asset, common class of assets and overall assets may be obtained. Data obtained from the opinion surveys (i.e. the third source data) in addition to the first and second rankings help in creating mapping matrix between TSM factors and ASM factors which may be specific to the technology asset.

The system conducts context and sentiment analysis on need for specific factor from amongst the second set of factors for a technology asset, and based on said context and sentiment analysis, the system may score the need for specific factor. In an example embodiment, the sentiment analysis may be scored as follows (i.e. number of instances of positive contexts) includes (i) sentiment of need for specific TSM is weak -(<10%), (no score or no mapping), (ii) sentiment is medium - (Between 10% to 40%), (score of 3 to 5) - mapping with less ranking (iii) sentiment is strong - (>40%), (score of 6 to 9) and mapping with high ranking. An example of a mapping matrix is illustrated in Table IV.

**Table IV**

| | TSM 1 | TSM 2 | TSM 3 | TSM 4 | TSM 5 | TSM 6 | TSM 7 | TSM 8 | TSM 9 |
|---|---|---|---|---|---|---|---|---|---|
| ASM 1 | X | X | X | X | X | | | | |
| ASM 2 | | X | | X | | | | | |
| ASM 3 | | X | | | X | | | | |
| ASM 4 | | X | | | X | | | | |
| ASM 5 | | X | | X | X | | | | |
| ASM 6 | | X | | | | X | | X | |
| ASM 7 | | X | | | | | X | | |
| ASM 8 | | X | | | | | | X | |
| ASM 9 | | X | | | | | | | X |

With reference to Table II, for the asset DiNC, high scoring ASM factors are ASM1, ASM2 and ASM9. Herein, the term `influencing factors' refers to those factors from amongst the first set of factors that may have more influence corresponding to a technology asset. Such influencing factors may be determined based the mapping matrix, for example the mapping matrix illustrated in the Table IV. Referring to Table IV, the influencing factors for ASM1 are TSM1, TSM2, TSM3, TSM4 and TSM5. For ASM2, the influencing factors are TSM2 and TSM4. For ASM9, the influencing factor is TSM9. The system compares the respective TSM zones across the plurality of technology components.

At 310, a mapping score is assigned to each of the plurality of technology assets against each technology component of the plurality of technology components based on the plurality of mapping matrices. Referring to Table I, for the technology assets Oracle JDK 10.0, Open JDK 8.0, Python 3.7.2, and Python 2.7 based on the mapping matric of Table IV. For example, the system 200 assigns a mapping score of (7+7+8+8 =30) to Oracle JDK 10.0, a score of (7+7+7+5=26) to Open JDK, and a score of (7+6+8+5=26) to Python 3.7 for technology asset DiNC. Accordingly, as per ASM1 factor of the second set of factors, Oracle JDK scores better followed by Open JDK and Python. Now, for the factor ASM2, the mapping score for the technology asset DiNC with technology component Oracle JDK 10.0 is 8, technology component Open JDK is (7+7=14), and technology component Python 3.7 is 6. Thus, as per ASM2 factor needs, technology component Open JDK scores better followed by technology component Oracle JDK and technology component Python. Similarly, for the factor ASM9, the mapping score for the technology asset DiNC with technology component Python 3.7 is 7 and Python 2.7 is 7. As per ASM9 needs, the technology component Python 3.7 and the technology component Python 2.7 scores are equal.

Considering ranking matrix order of priority is ASM9, ASM1 and ASM2, weightage for rank 1 = 9, rank 2= 3, rank 3 = 2. Applying weightages on ASM scores for each technology components, the weighted values for ASM factors for each technology component are determined, as illustrated in Table V.

**Table V**

| TECHNOLOGY AND VERSION | WEIGHTED ASM1 | WEIGHTED ASM2 | WEIGHTED ASM3 |
|---|---|---|---|
| ORACLE JDK^{™} 10.0 | SCORE * WEIGHTAGE 30*3=90 | SCORE * WEIGHTAGE 8*3=24 | 0 |
| OPEN JDK^{™} 8.0 | SCORE * WEIGHTAGE 26*3=78 | SCORE * WEIGHTAGE 14*3=42 | 0 |
| PYTHON^{™} 3.7.2 | SCORE * WEIGHTAGE 6*3=18 | SCORE * WEIGHTAGE 7*3=21 | SCORE * WEIGHTAGE 7*9=21 |
| PYTHON^{™} 2.7 | 0 | 0 | SCORE * WEIGHTAGE 7*9=21 |

In an embodiment, scoring zero in any of the categories disqualifies the technology component. Hence, after said criteria, Python 3.7.2 may be recommended as the only technology component at 312.

In an embodiment, the system may provide technology recommendation for specific technology related specific ASM area. In an embodiment, the system may provide periodic calculation of scores for all technologies and versions (or technology components) against ASM configuration to detect and need for advisory. The system may further provide on-demand technology advisory against specific new technology versions.

The written description describes the subject matter herein to enable any person skilled in the art to make and use the embodiments.

The embodiments herein disclose method and system for providing technology recommendations. In one embodiment, the disclosed system assigns ranking to the factors associated with technology components of technology assets and factors associated with the technology assets. Based on the aforementioned rankings and scores in addition to multiple mapping matrices, the system derives recommendations for technologies. An important contribution of the disclosed embodiments is provisioning of recommendations based on the aforementioned rankings and mapping matrices. The embodiments of present disclosure herein addresses unresolved problem of dynamically identifying technology components and recommending the same. The embodiment, thus provides a system for providing technology recommendations based on a unique and dynamic computation of TSM, ASM, mapping matrix of ASM and TSM.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) for technology recommendations, comprising:
identifying a plurality of technology components corresponding to a plurality of technology assets stored in an asset repository (246), via one or more hardware processors (202) (302);
assigning, via the one or more hardware processors (202), a first ranking to each factor of a first set of factors corresponding to each of the plurality of technology components based on a Natural language processing of a first source data associated with the plurality of technology components, the first source data obtained from a first plurality of sources (304), wherein assigning the first ranking to a factor from amongst the first set of factors based on the Natural language processing of the first source data associated with a technology component from amongst the plurality of technology components comprises:
identifying positive instances of a technology associated with the technology component in the first source data, wherein the positive instances are identified by extracting subjective information from words, sentence, features, documents, expressions in the first source data by performing the Natural language processing on the first source data;
creating an index of a count of the positive instances of the factor and synonyms thereof;
conducting a context analysis and a sentiment analysis on the positive instances identified for the factor corresponding to the technology component, wherein the context analysis and the sentiment analysis on the positive instances is conducted by performing sensitivity analysis by classifying a polarity of a text in the words, sentence, features, documents, expressions to determine whether expressed opinion in the text is positive, negative or neutral and to determine emotional states; and
ranking the factor based on the context analysis and the sentiment analysis;
assigning, via the one or more hardware processors, a second ranking to each factor of a second set of factors corresponding to each of the plurality of technology assets based on a Natural language processing of a second source data associated with the plurality of technology assets, the second source data obtained from a second plurality of sources (306), wherein assigning the second ranking to a factor from amongst the second set of factors based on the Natural language processing of the second source data associated with a technology asset from amongst the plurality of technology assets comprises:
identifying positive instances of the technology asset in the second source data, wherein the positive instances are identified by extracting subjective information from words, sentence, features, documents, expressions in the second source data by performing the Natural language processing on the second source data;
creating an index of a count of the positive instances of the factor and synonyms thereof;
conducting a context analysis and a sentiment analysis on the positive instances identified for the factor corresponding to the technology asset, wherein the context analysis and the sentiment analysis on the positive instances is conducted by performing sensitivity analysis by classifying a polarity of a text in the words, sentence, features, documents, expressions to determine whether expressed opinion in the text is positive, negative or neutral and to determine emotional states;
obtaining a score for the factor based on the context analysis and the sentiment analysis;
obtaining an interpretation of asset survey results for the second plurality of factors from the one or more surveys associated with the plurality of technology assets, wherein the asset survey results for the second plurality of factors are interpreted by analyzing the asset survey results by using Natural language processing techniques to determine relative relevance of the second plurality of factors and opinion of asset owners on importance of the second plurality of factors; and
ranking the factor based on a comparison of the score obtained by the context analysis and the sentiment analysis with the interpretation of asset survey results, wherein ranking the factor includes:
determining if a sentiment score for the factor in survey is more and the score is less, then sentiment is given priority and the score is increased based on a sentiment range,
determining if the sentiment score for any factor reflects the score, then the second ranking is assigned based on the score,
determining if the sentiment for the factor is poor, but the score is more, then the sentiment score is given priority and the score is decreased by the sentiment range;
deriving, via the one or more hardware processors, a plurality of mapping matrices corresponding to the plurality of technology assets based at least on the first ranking of the first set of factors and the second ranking of the second set of factors, wherein a mapping matrix of the plurality of mapping matrices corresponding to a technology asset of the plurality of technology assets is indicative of relative relevance of the first set of factors associated with a technology component with respect to the second set of factors associated with the technology asset (308), wherein the plurality of mapping matrices derived by mapping the factors from amongst the first set of factors which closely match with the factors from amongst the second set of factors as high ranked factors, wherein deriving the plurality of mapping matrices comprises:
receiving a third source data from a third plurality of sources;
obtaining a positive indication of linkage between the first set of factors and the second set of factors by performing a natural language processing of the third source data; and
deriving the plurality of mapping matrices based on the first ranking of the first set of factors, the second ranking of the second set of factors, and the positive indication of the linkage between the first set of factors and the second set of factors;
assigning, via the one or more hardware processors, a mapping score to each of the plurality of technology assets against each technology component of the plurality of technology components based on the plurality of mapping matrices (310); and
recommending, via the one or more hardware processors, a technology asset from amongst the plurality of technology assets based on the mapping score assigned to each of the plurality of technology assets (312).

2. The method of claim 1, wherein the first set of factors comprises sustenance factor, common use factor, resource availability factor, performance factor, security factor, AI factor, cloud factor, Big Data factor, and automation factor.

3. The method of claim 1, wherein the first plurality of sources comprise survey data obtained from one or more surveys, social media data, analyst reports and incident data obtained corresponding to the first set of factors.

4. The method of claim 1, wherein the second set of factors comprises mission criticality factor, performance factor, security factor, data privacy factor, maintainability factor, artificial intelligence (AI) factor, cloud factor, Big Data factor, and automation factor.

5. The method of claim 1, wherein the second plurality of sources comprises information documentation associated with the plurality of technology assets, intellectual property safety reports associated with the plurality of technology assets, social media data, and one or more surveys associated with the plurality of technology assets.

6. A system (200) for technology recommendations, comprising:
one or more memories (204); and
one or more hardware processors (202), the one or more memories (204) coupled to the one or more hardware processors (202), wherein the one or more hardware processors (202) are configured to execute programmed instructions stored in the one or more memories (204) to:
identify a plurality of technology components corresponding to a plurality of technology assets stored in an asset repository (246);
assign a first ranking to each factor of a first set of factors corresponding to each of the plurality of technology components based on a Natural language processing of a first source data associated with the plurality of technology components, the first source data obtained from a first plurality of sources, wherein assigning the first ranking to a factor from amongst the first set of factors based on the Natural language processing of the first source data associated with a technology component from amongst the plurality of technology components comprises:
identify positive instances of a technology associated with the technology component in the first source data, wherein the positive instances are identified by extracting subjective information from words, sentence, features, documents, expressions in the first source data by performing the Natural language processing on the first source data;
create an index of a count of the positive instances of the factor and synonyms thereof;
conduct a context analysis and a sentiment analysis on the positive instance identified for the factor corresponding to the technology component, wherein the context analysis and the sentiment analysis on the positive instances is conducted by performing sensitivity analysis by classifying a polarity of a text in the words, sentence, features, documents, expressions to determine whether expressed opinion in the text is positive, negative or neutral and to determine emotional states; and
rank the factor based on the context analysis and the sentiment analysis;
assign a second ranking to each factor of a second set of factors corresponding to each of the plurality of technology assets based on a Natural language processing of a second source data associated with the plurality of technology assets, the second source data obtained from a second plurality of sources, wherein assigning the second ranking to a factor from amongst the second set of factors based on the Natural language processing of the second source data associated with a technology asset from amongst the plurality of technology assets comprises:
identify positive instances of the technology asset in the second source data, wherein the positive instances are identified by extracting subjective information from words, sentence, features, documents, expressions in the second source data by performing the Natural language processing on the second source data;
create an index of a count of the positive instances of the factor and synonyms thereof;
conduct a context analysis and a sentiment analysis on the positive instances identified for the factor corresponding to the technology asset, wherein the context analysis and the sentiment analysis on the positive instances is conducted by performing sensitivity analysis by classifying a polarity of a text in the words, sentence, features, documents, expressions to determine whether expressed opinion in the text is positive, negative or neutral and to determine emotional states;
obtain a score for the factor based on the context analysis and the sentiment analysis;
obtain an interpretation of asset survey results for the second plurality of factors from the one or more surveys associated with the plurality of technology assets, wherein the asset survey results for the second plurality of factors are interpreted by analyzing the asset survey results by using Natural language processing techniques to determine relative relevance of the second plurality of factors and opinion of asset owners on importance of the second plurality of factors; and
rank the factor based on a comparison of the score obtained by the context analysis and the sentiment analysis with the interpretation of asset survey results, wherein ranking the factor includes:
determining if a sentiment score for the factor in survey is more and the score is less, then sentiment is given priority and the score is increased based on a sentiment range,
determining if the sentiment score for any factor reflects the score, then the second ranking is assigned based on the score,
determining if the sentiment for the factor is poor, but the score is more, then the sentiment score is given priority and the score is decreased by the sentiment range;
derive a plurality of mapping matrices corresponding to the plurality of technology assets based at least on the first ranking of the first set of factors and the second ranking of the second set of factors, wherein a mapping matrix of the plurality of mapping matrices corresponding to a technology asset of the plurality of technology assets is indicative of relative relevance of the first set of factors associated with a technology component with respect to the second set of factors associated with the technology asset, wherein the plurality of mapping matrices derived by mapping the factors from amongst the first set of factors which closely match with the factors from amongst the second set of factors as high ranked factors, wherein deriving the plurality of mapping matrices comprises:
receive a third source data from a third plurality of sources;
obtain a positive indication of linkage between the first set of factors and the second set of factors by performing a natural language processing of the third source data; and
derive the plurality of mapping matrices based on the first ranking of the first set of factors, the second ranking of the second set of factors, and the positive indication of the linkage between the first set of factors and the second set of factors;
assign a mapping score to each of the plurality of technology assets against each technology component of the plurality of technology components based on the plurality of mapping matrices; and
recommend a technology asset from amongst the plurality of technology assets based on the mapping score assigned to each of the plurality of technology assets.

7. The system of claim 6, wherein the first set of factors comprises sustenance factor, common use factor, resource availability factor, performance factor, security factor, AI factor, cloud factor, Big Data factor, and automation factor.

8. The system of claim 6, wherein the first plurality of sources comprises survey data obtained from one or more surveys, social media data, analyst reports and incident data obtained corresponding to the first set of factors.

9. The system of claim 6, wherein the second set of factors comprises mission criticality factor, performance factor, security factor, data privacy factor, maintainability factor, AI factor, cloud factor, Big Data factor, and automation factor.

10. The system of claim 6, wherein the second plurality of sources comprises information documentation associated with the plurality of technology assets, intellectual property safety reports associated with the plurality of technology assets, social media data, and one or more surveys associated with the plurality of technology assets.

11. One or more non-transitory machine-readable information storage mediums comprising one or more instructions which when executed by one or more hardware processors cause:
identifying a plurality of technology components corresponding to a plurality of technology assets stored in an asset repository, via one or more hardware processors;
assigning, via the one or more hardware processors, a first ranking to each factor of a first set of factors corresponding to each of the plurality of technology components based on a Natural language processing of a first source data associated with the plurality of technology components, the first source data obtained from a first plurality of sources, wherein assigning the first ranking to a factor from amongst the first set of factors based on the Natural language processing of the first source data associated with a technology component from amongst the plurality of technology components comprises:
identifying positive instances of a technology associated with the technology component in the first source data, wherein the positive instances are identified by extracting subjective information from words, sentence, features, documents, expressions in the first source data by performing the Natural language processing on the first source data;
creating an index of a count of the positive instances of the factor and synonyms thereof;
conducting a context analysis and a sentiment analysis on the positive instances identified for the factor corresponding to the technology component, wherein the context analysis and the sentiment analysis on the positive instances is conducted by performing sensitivity analysis by classifying a polarity of a text in the words, sentence, features, documents, expressions to determine whether expressed opinion in the text is positive, negative or neutral and to determine emotional states; and
ranking the factor based on the context analysis and the sentiment analysis;
assigning, via the one or more hardware processors, a second ranking to each factor of a second set of factors corresponding to each of the plurality of technology assets based on a Natural language processing of a second source data associated with the plurality of technology assets, the second source data obtained from a second plurality of sources, wherein assigning the second ranking to a factor from amongst the second set of factors based on the Natural language processing of the second source data associated with a technology asset from amongst the plurality of technology assets comprises:
identifying positive instances of the technology asset in the second source data, wherein the positive instances are identified by extracting subjective information from words, sentence, features, documents, expressions in the second source data by performing the Natural language processing on the second source data;
creating an index of a count of the positive instances of the factor and synonyms thereof;
conducting a context analysis and a sentiment analysis on the positive instances identified for the factor corresponding to the technology asset, wherein the context analysis and the sentiment analysis on the positive instances is conducted by performing sensitivity analysis by classifying a polarity of a text in the words, sentence, features, documents, expressions to determine whether expressed opinion in the text is positive, negative or neutral and to determine emotional states;
obtaining a score for the factor based on the context analysis and the sentiment analysis;
obtaining an interpretation of asset survey results for the second plurality of factors from the one or more surveys associated with the plurality of technology assets, wherein the asset survey results for the second plurality of factors are interpreted by analyzing the asset survey results by using Natural language processing techniques to determine relative relevance of the second plurality of factors and opinion of asset owners on importance of the second plurality of factors; and
ranking the factor based on a comparison of the score obtained by the context analysis and the sentiment analysis with the interpretation of asset survey results, wherein ranking the factor includes:
determining if a sentiment score for the factor in survey is more and the score is less, then sentiment is given priority and the score is increased based on a sentiment range,
determining if the sentiment score for any factor reflects the score, then the second ranking is assigned based on the score,
determining if the sentiment for the factor is poor, but the score is more, then the sentiment score is given priority and the score is decreased by the sentiment range;
deriving, via the one or more hardware processors, a plurality of mapping matrices corresponding to the plurality of technology assets based at least on the first ranking of the first set of factors and the second ranking of the second set of factors, wherein a mapping matrix of the plurality of mapping matrices corresponding to a technology asset of the plurality of technology assets is indicative of relative relevance of the first set of factors associated with a technology component with respect to the second set of factors associated with the technology asset, wherein the plurality of mapping matrices derived by mapping the factors from amongst the first set of factors which closely match with the factors from amongst the second set of factors as high ranked factors, wherein deriving the plurality of mapping matrices comprises:
receiving a third source data from a third plurality of sources;
obtaining a positive indication of linkage between the first set of factors and the second set of factors by performing a natural language processing of the third source data; and
deriving the plurality of mapping matrices based on the first ranking of the first set of factors, the second ranking of the second set of factors, and the positive indication of the linkage between the first set of factors and the second set of factors;
assigning, via the one or more hardware processors, a mapping score to each of the plurality of technology assets against each technology component of the plurality of technology components based on the plurality of mapping matrices; and
recommending, via the one or more hardware processors, a technology asset from amongst the plurality of technology assets based on the mapping score assigned to each of the plurality of technology assets.

## Patentansprüche

1. Prozessorimplementiertes Verfahren (300) für Technologieempfehlungen, umfassend:
Identifizieren einer Vielzahl von Technologiekomponenten, die einer Vielzahl von Technologieassets entsprechen, die in einem Asset-Repository (246) gespeichert sind, mittels eines oder mehrerer Hardwareprozessoren (202) (302);
Zuweisen, mittels des einen oder der mehreren Hardwareprozessoren (202), einer ersten Rangfolge zu jedem Faktor eines ersten Satzes von Faktoren, die jeder der Vielzahl von Technologiekomponenten entsprechen, basierend auf einer Verarbeitung in natürlicher Sprache von ersten Quelldaten, die der Vielzahl von Technologiekomponenten zugeordnet sind, wobei die ersten Quelldaten aus einer ersten Vielzahl von Quellen (304) erhalten werden, wobei das Zuweisen der ersten Rangfolge zu einem Faktor aus dem ersten Satz von Faktoren basierend auf der Verarbeitung in natürlicher Sprache der ersten Quelldaten, die einer Technologiekomponente aus der Vielzahl von Technologiekomponenten zugeordnet sind, umfasst:
Identifizieren positiver Instanzen einer Technologie, die der Technologiekomponente in den ersten Quelldaten zugeordnet sind, wobei die positiven Instanzen durch Extrahieren subjektiver Informationen aus Wörtern, Sätzen, Merkmalen, Dokumenten, Ausdrücken in den ersten Quelldaten durch Durchführen der Verarbeitung in natürlicher Sprache an den ersten Quelldaten identifiziert werden;
Erstellen eines Index einer Zählung der positiven Instanzen des Faktors und Synonymen davon;
Durchführen einer Kontextanalyse und einer Stimmungsanalyse an den positiven Instanzen, die für den Faktor identifiziert wurden, der der Technologiekomponente entspricht, wobei die Kontextanalyse und die Stimmungsanalyse an den positiven Instanzen durch Durchführen einer Empfindlichkeitsanalyse durch Klassifizieren einer Polarität eines Texts in den Wörtern, Sätzen, Merkmalen, Dokumenten, Ausdrücken durchgeführt werden, um zu bestimmen, ob die ausgedrückte Meinung in dem Text positiv, negativ oder neutral ist, und um emotionale Zustände zu bestimmen; und
Einstufen des Faktors basierend auf der Kontextanalyse und der Stimmungsanalyse;
Zuweisen, mittels des einen oder der mehreren Hardwareprozessoren, einer zweiten Rangfolge zu jedem Faktor eines zweiten Satzes von Faktoren, die jeder der Vielzahl von Technologieassets entsprechen, basierend auf einer Verarbeitung in natürlicher Sprache von zweiten Quelldaten, die der Vielzahl von Technologieassets zugeordnet sind, wobei die zweiten Quelldaten aus einer zweiten Vielzahl von Quellen (306) erhalten werden, wobei das Zuweisen der zweiten Rangfolge zu einem Faktor aus dem zweiten Satz von Faktoren basierend auf der Verarbeitung in natürlicher Sprache der zweiten Quelldaten, die einem Technologieasset aus der Vielzahl von Technologieassets zugeordnet sind, umfasst:
Identifizieren positiver Instanzen des Technologieassets in den zweiten Quelldaten, wobei die positiven Instanzen durch Extrahieren subjektiver Informationen aus Wörtern, Sätzen, Merkmalen, Dokumenten, Ausdrücken in den zweiten Quelldaten durch Durchführen der Verarbeitung in natürlicher Sprache an den zweiten Quelldaten identifiziert werden;
Erstellen eines Index einer Zählung der positiven Instanzen des Faktors und Synonymen davon;
Durchführen einer Kontextanalyse und einer Stimmungsanalyse an den positiven Instanzen, die für den Faktor identifiziert wurden, der dem Technologieasset entspricht, wobei die Kontextanalyse und die Stimmungsanalyse an den positiven Instanzen durch Durchführen einer Empfindlichkeitsanalyse durch Klassifizieren einer Polarität eines Texts in den Wörtern, Sätzen, Merkmalen, Dokumenten, Ausdrücken durchgeführt werden, um zu bestimmen, ob die ausgedrückte Meinung in dem Text positiv, negativ oder neutral ist, und um emotionale Zustände zu bestimmen;
Erhalten einer Bewertung für den Faktor basierend auf der Kontextanalyse und der Stimmungsanalyse;
Erhalten einer Interpretation von Asseterhebungsergebnissen für die zweite Vielzahl von Faktoren aus der einen oder den mehreren Erhebungen, die der Vielzahl von Technologieassets zugeordnet sind, wobei die Asseterhebungsergebnisse für die zweite Vielzahl von Faktoren durch Analysieren der Asseterhebungsergebnisse unter Verwendung von Verarbeitungstechniken in natürlicher Sprache interpretiert werden, um die relative Relevanz der zweiten Vielzahl von Faktoren und die Meinung von Assetbesitzern über die Wichtigkeit der zweiten Vielzahl von Faktoren zu bestimmen; und
Einstufen des Faktors basierend auf einem Vergleich der Bewertung, die durch die Kontextanalyse und die Stimmungsanalyse erhalten wird, mit der Interpretation von Asseterhebungsergebnissen, wobei das Einstufen des Faktors umfasst:
Bestimmen, ob eine Stimmungsbewertung für den Faktor in der Erhebung höher ist und die Bewertung niedriger ist, dann wird der Stimmung Priorität gegeben und die Bewertung wird basierend auf einem Stimmungsbereich erhöht,
Bestimmen, ob die Stimmungsbewertung für einen beliebigen Faktor die Bewertung widerspiegelt, dann wird die zweite Einstufung basierend auf der Bewertung zugewiesen,
Bestimmen, ob die Stimmung für den Faktor schlecht ist, aber die Bewertung höher ist, dann wird der Stimmungsbewertung Priorität gegeben und die Bewertung wird um den Stimmungsbereich verringert;
Ableiten, mittels des einen oder der mehreren Hardwareprozessoren, einer Vielzahl von Abbildungsmatrizen, die der Vielzahl von Technologieassets entsprechen, basierend zumindest auf der ersten Rangfolge des ersten Satzes von Faktoren und der zweiten Rangfolge des zweiten Satzes von Faktoren, wobei eine Abbildungsmatrix der Vielzahl von Abbildungsmatrizen, die einem Technologieasset der Vielzahl von Technologieassets entsprechen, eine relative Relevanz des ersten Satzes von Faktoren, die einer Technologiekomponente zugeordnet sind, in Bezug auf den zweiten Satz von Faktoren, die dem Technologieasset (308) zugeordnet sind, angibt, wobei die Vielzahl von Abbildungsmatrizen durch Abbilden der Faktoren aus dem ersten Satz von Faktoren, die mit den Faktoren aus dem zweiten Satz von Faktoren eng übereinstimmen, als hochrangige Faktoren abgeleitet wird, wobei das Ableiten der Vielzahl von Abbildungsmatrizen umfasst:
Empfangen von dritten Quelldaten aus einer dritten Vielzahl von Quellen;
Erhalten einer positiven Angabe einer Verknüpfung zwischen dem ersten Satz von Faktoren und dem zweiten Satz von Faktoren durch Durchführen einer Verarbeitung in natürlicher Sprache der dritten Quelldaten; und
Ableiten der Vielzahl von Abbildungsmatrizen basierend auf der ersten Rangfolge des ersten Satzes von Faktoren, der zweiten Rangfolge des zweiten Satzes von Faktoren und der positiven Angabe der Verknüpfung zwischen dem ersten Satz von Faktoren und dem zweiten Satz von Faktoren;
Zuweisen, mittels des einen oder der mehreren Hardwareprozessoren, einer Abbildungsbewertung zu jedem der Vielzahl von Technologieassets gegenüber jeder Technologiekomponente der Vielzahl von Technologiekomponenten basierend auf der Vielzahl von Abbildungsmatrizen (310); und
Empfehlen, mittels des einen oder der mehreren Hardwareprozessoren, eines Technologieassets aus der Vielzahl von Technologieassets basierend auf der Abbildungsbewertung, die jedem der Vielzahl von Technologieassets zugewiesen ist (312).

2. Verfahren nach Anspruch 1, wobei der erste Satz von Faktoren einen Aufrechterhaltungsfaktor, einen gemeinsamen Nutzungsfaktor, einen Ressourcenverfügbarkeitsfaktor, einen Leistungsfaktor, einen Sicherheitsfaktor, einen KI-Faktor, einen Cloud-Faktor, einen Big-Data-Faktor und einen Automatisierungsfaktor umfasst.

3. Verfahren nach Anspruch 1, wobei die erste Vielzahl von Quellen Erhebungsdaten, die aus einer oder mehreren Erhebungen erhalten werden, Social-Media-Daten, Analyseberichte und Ereignisdaten, die entsprechend dem ersten Satz von Faktoren erhalten werden, umfasst.

4. Verfahren nach Anspruch 1, wobei der zweite Satz von Faktoren einen Missionskritikalitätsfaktor, einen Leistungsfaktor, einen Sicherheitsfaktor, einen Datenschutzfaktor, einen Wartbarkeitsfaktor, einen Faktor für künstliche Intelligenz (KI), einen Cloud-Faktor, einen Big-Data-Faktor und einen Automatisierungsfaktor umfasst.

5. Verfahren nach Anspruch 1, wobei die zweite Vielzahl von Quellen eine Informationsdokumentation, die der Vielzahl von Technologieanlagen zugeordnet ist, Sicherheitsberichte für geistiges Eigentum, die der Vielzahl von Technologieanlagen zugeordnet sind, Social-Media-Daten und eine oder mehrere Erhebungen, die der Vielzahl von Technologieanlagen zugeordnet sind, umfasst.

6. System (200) für Technologieempfehlungen, umfassend:
einen oder mehrere Speicher (204); und
einen oder mehrere Hardwareprozessoren (202), wobei der eine oder die mehreren Speicher (204) mit dem einen oder den mehreren Hardwareprozessoren (202) gekoppelt sind, wobei der eine oder die mehreren Hardwareprozessoren (202) konfiguriert sind, um programmierte Anweisungen auszuführen, die in dem einen oder den mehreren Speichern (204) gespeichert sind, zum:
Identifizieren einer Vielzahl von Technologiekomponenten, die einer Vielzahl von Technologieassets entsprechen, die in einem Asset-Repository (246) gespeichert sind;
Zuweisen einer ersten Rangfolge zu jedem Faktor eines ersten Satzes von Faktoren, die jeder der Vielzahl von Technologiekomponenten entsprechen, basierend auf einer Verarbeitung in natürlicher Sprache von ersten Quelldaten, die der Vielzahl von Technologiekomponenten zugeordnet sind, wobei die ersten Quelldaten aus einer ersten Vielzahl von Quellen erhalten werden, wobei das Zuweisen der ersten Rangfolge zu einem Faktor aus dem ersten Satz von Faktoren basierend auf der Verarbeitung in natürlicher Sprache der ersten Quelldaten, die einer Technologiekomponente aus der Vielzahl von Technologiekomponenten zugeordnet sind, umfasst:
Identifizieren positiver Instanzen einer Technologie, die der Technologiekomponente in den ersten Quelldaten zugeordnet sind, wobei die positiven Instanzen durch Extrahieren subjektiver Informationen aus Wörtern, Sätzen, Merkmalen, Dokumenten, Ausdrücken in den ersten Quelldaten durch Durchführen der Verarbeitung in natürlicher Sprache an den ersten Quelldaten identifiziert werden;
Erstellen eines Index einer Zählung der positiven Instanzen des Faktors und Synonymen davon;
Durchführen einer Kontextanalyse und einer Stimmungsanalyse an der positiven Instanz, die für den Faktor identifiziert wurden, der der Technologiekomponente entspricht, wobei die Kontextanalyse und die Stimmungsanalyse an den positiven Instanzen durch Durchführen einer Empfindlichkeitsanalyse durch Klassifizieren einer Polarität eines Texts in den Wörtern, Sätzen, Merkmalen, Dokumenten, Ausdrücken durchgeführt werden, um zu bestimmen, ob die ausgedrückte Meinung in dem Text positiv, negativ oder neutral ist, und um emotionale Zustände zu bestimmen; und
Einstufen des Faktors basierend auf der Kontextanalyse und der Stimmungsanalyse;
Zuweisen einer zweiten Rangfolge zu jedem Faktor eines zweiten Satzes von Faktoren, die jeder der Vielzahl von Technologieassets entsprechen, basierend auf einer Verarbeitung in natürlicher Sprache von zweiten Quelldaten, die der Vielzahl von Technologieassets zugeordnet sind, wobei die zweiten Quelldaten aus einer zweiten Vielzahl von Quellen erhalten werden, wobei das Zuweisen der zweiten Rangfolge zu einem Faktor aus dem zweiten Satz von Faktoren basierend auf der Verarbeitung in natürlicher Sprache der zweiten Quelldaten, die einem Technologieasset aus der Vielzahl von Technologieassets zugeordnet sind, umfasst:
Identifizieren positiver Instanzen des Technologieassets in den zweiten Quelldaten, wobei die positiven Instanzen durch Extrahieren subjektiver Informationen aus Wörtern, Sätzen, Merkmalen, Dokumenten, Ausdrücken in den zweiten Quelldaten durch Durchführen der Verarbeitung in natürlicher Sprache an den zweiten Quelldaten identifiziert werden;
Erstellen eines Index einer Zählung der positiven Instanzen des Faktors und Synonymen davon;
Durchführen einer Kontextanalyse und einer Stimmungsanalyse an den positiven Instanzen, die für den Faktor identifiziert wurden, der dem Technologieasset entspricht, wobei die Kontextanalyse und die Stimmungsanalyse an den positiven Instanzen durch Durchführen einer Empfindlichkeitsanalyse durch Klassifizieren einer Polarität eines Texts in den Wörtern, Sätzen, Merkmalen, Dokumenten, Ausdrücken durchgeführt werden, um zu bestimmen, ob die ausgedrückte Meinung in dem Text positiv, negativ oder neutral ist, und um emotionale Zustände zu bestimmen;
Erhalten einer Bewertung für den Faktor basierend auf der Kontextanalyse und der Stimmungsanalyse;
Erhalten einer Interpretation von Asseterhebungsergebnissen für die zweite Vielzahl von Faktoren aus der einen oder den mehreren Erhebungen, die der Vielzahl von Technologieassets zugeordnet sind, wobei die Asseterhebungsergebnisse für die zweite Vielzahl von Faktoren durch Analysieren der Asseterhebungsergebnisse unter Verwendung von Verarbeitungstechniken in natürlicher Sprache interpretiert werden, um die relative Relevanz der zweiten Vielzahl von Faktoren und die Meinung von Assetbesitzern über die Wichtigkeit der zweiten Vielzahl von Faktoren zu bestimmen; und
Einstufen des Faktors basierend auf einem Vergleich der Bewertung, die durch die Kontextanalyse und die Stimmungsanalyse erhalten wird, mit der Interpretation von Asseterhebungsergebnissen, wobei das Einstufen des Faktors umfasst:
Bestimmen, ob eine Stimmungsbewertung für den Faktor in der Erhebung höher ist und die Bewertung niedriger ist, dann wird der Stimmung Priorität gegeben und die Bewertung wird basierend auf einem Stimmungsbereich erhöht,
Bestimmen, ob die Stimmungsbewertung für einen beliebigen Faktor die Bewertung widerspiegelt, dann wird die zweite Einstufung basierend auf der Bewertung zugewiesen,
Bestimmen, ob die Stimmung für den Faktor schlecht ist, aber die Bewertung höher ist, dann wird der Stimmungsbewertung Priorität gegeben und die Bewertung wird um den Stimmungsbereich verringert;
Ableiten einer Vielzahl von Abbildungsmatrizen, die der Vielzahl von Technologieassets entsprechen, basierend zumindest auf der ersten Rangfolge des ersten Satzes von Faktoren und der zweiten Rangfolge des zweiten Satzes von Faktoren, wobei eine Abbildungsmatrix der Vielzahl von Abbildungsmatrizen, die einem Technologieasset der Vielzahl von Technologieassets entsprechen, eine relative Relevanz des ersten Satzes von Faktoren, die einer Technologiekomponente zugeordnet sind, in Bezug auf den zweiten Satz von Faktoren, die dem Technologieasset zugeordnet sind, angibt, wobei die Vielzahl von Abbildungsmatrizen durch Abbilden der Faktoren aus dem ersten Satz von Faktoren, die mit den Faktoren aus dem zweiten Satz von Faktoren eng übereinstimmen, als hochrangige Faktoren abgeleitet wird, wobei das Ableiten der Vielzahl von Abbildungsmatrizen umfasst:
Empfangen von dritten Quelldaten aus einer dritten Vielzahl von Quellen;
Erhalten einer positiven Angabe einer Verknüpfung zwischen dem ersten Satz von Faktoren und dem zweiten Satz von Faktoren durch Durchführen einer Verarbeitung in natürlicher Sprache der dritten Quelldaten; und
Ableiten der Vielzahl von Abbildungsmatrizen basierend auf der ersten Rangfolge des ersten Satzes von Faktoren, der zweiten Rangfolge des zweiten Satzes von Faktoren und der positiven Angabe der Verknüpfung zwischen dem ersten Satz von Faktoren und dem zweiten Satz von Faktoren;
Zuweisen einer Abbildungsbewertung zu jedem der Vielzahl von Technologieassets gegenüber jeder Technologiekomponente der Vielzahl von Technologiekomponenten basierend auf der Vielzahl von Abbildungsmatrizen; und
Empfehlen eines Technologieassets aus der Vielzahl von Technologieassets basierend auf der Abbildungsbewertung, die jedem der Vielzahl von Technologieassets zugewiesen ist.

7. System nach Anspruch 6, wobei der erste Satz von Faktoren einen Aufrechterhaltungsfaktor, einen gemeinsamen Nutzungsfaktor, einen Ressourcenverfügbarkeitsfaktor, einen Leistungsfaktor, einen Sicherheitsfaktor, einen KI-Faktor, einen Cloud-Faktor, einen Big-Data-Faktor und einen Automatisierungsfaktor umfasst.

8. System nach Anspruch 6, wobei die erste Vielzahl von Quellen Erhebungsdaten, die aus einer oder mehreren Erhebungen erhalten werden, Social-Media-Daten, Analyseberichte und Ereignisdaten, die entsprechend dem ersten Satz von Faktoren erhalten werden, umfasst.

9. System nach Anspruch 6, wobei der zweite Satz von Faktoren einen Missionskritikalitätsfaktor, einen Leistungsfaktor, einen Sicherheitsfaktor, einen Datenschutzfaktor, einen Wartbarkeitsfaktor, einen KI-Faktor, einen Cloud-Faktor, einen Big-Data-Faktor und einen Automatisierungsfaktor umfasst.

10. System nach Anspruch 6, wobei die zweite Vielzahl von Quellen eine Informationsdokumentation, die der Vielzahl von Technologieanlagen zugeordnet ist, Sicherheitsberichte für geistiges Eigentum, die der Vielzahl von Technologieanlagen zugeordnet sind, Social-Media-Daten und eine oder mehrere Erhebungen, die der Vielzahl von Technologieanlagen zugeordnet sind, umfasst.

11. Ein oder mehrere nichtflüchtige maschinenlesbare Informationsspeichermedien, umfassend eine oder mehrere Anweisungen, die, wenn sie von einem oder mehreren Hardwareprozessoren ausgeführt werden, bewirken:
Identifizieren einer Vielzahl von Technologiekomponenten, die einer Vielzahl von Technologieassets entsprechen, die in einem Asset-Repository gespeichert sind, mittels eines oder mehrerer Hardwareprozessoren;
Zuweisen, mittels des einen oder der mehreren Hardwareprozessoren, einer ersten Rangfolge zu jedem Faktor eines ersten Satzes von Faktoren, die jeder der Vielzahl von Technologiekomponenten entsprechen, basierend auf einer Verarbeitung in natürlicher Sprache von ersten Quelldaten, die der Vielzahl von Technologiekomponenten zugeordnet sind, wobei die ersten Quelldaten aus einer ersten Vielzahl von Quellen erhalten werden, wobei das Zuweisen der ersten Rangfolge zu einem Faktor aus dem ersten Satz von Faktoren basierend auf der Verarbeitung in natürlicher Sprache der ersten Quelldaten, die einer Technologiekomponente aus der Vielzahl von Technologiekomponenten zugeordnet sind, umfasst:
Identifizieren positiver Instanzen einer Technologie, die der Technologiekomponente in den ersten Quelldaten zugeordnet ist, wobei die positiven Instanzen durch Extrahieren subjektiver Informationen aus Wörtern, Sätzen, Merkmalen, Dokumenten, Ausdrücken in den ersten Quelldaten durch Durchführen der Verarbeitung in natürlicher Sprache an den ersten Quelldaten identifiziert werden;
Erstellen eines Index einer Zählung der positiven Instanzen des Faktors und Synonymen davon;
Durchführen einer Kontextanalyse und einer Stimmungsanalyse an den positiven Instanzen, die für den Faktor identifiziert wurden, der der Technologiekomponente entspricht, wobei die Kontextanalyse und die Stimmungsanalyse an den positiven Instanzen durch Durchführen einer Empfindlichkeitsanalyse durch Klassifizieren einer Polarität eines Texts in den Wörtern, Sätzen, Merkmalen, Dokumenten, Ausdrücken durchgeführt werden, um zu bestimmen, ob die ausgedrückte Meinung in dem Text positiv, negativ oder neutral ist, und um emotionale Zustände zu bestimmen; und
Einstufen des Faktors basierend auf der Kontextanalyse und der Stimmungsanalyse;
Zuweisen, mittels des einen oder der mehreren Hardwareprozessoren, einer zweiten Rangfolge zu jedem Faktor eines zweiten Satzes von Faktoren, die jeder der Vielzahl von Technologieassets entsprechen, basierend auf einer Verarbeitung in natürlicher Sprache von zweiten Quelldaten, die der Vielzahl von Technologieassets zugeordnet sind, wobei die zweiten Quelldaten aus einer zweiten Vielzahl von Quellen erhalten werden, wobei das Zuweisen der zweiten Rangfolge zu einem Faktor aus dem zweiten Satz von Faktoren basierend auf der Verarbeitung in natürlicher Sprache der zweiten Quelldaten, die einem Technologieasset aus der Vielzahl von Technologieassets zugeordnet sind, umfasst:
Identifizieren positiver Instanzen des Technologieassets in den zweiten Quelldaten, wobei die positiven Instanzen durch Extrahieren subjektiver Informationen aus Wörtern, Sätzen, Merkmalen, Dokumenten, Ausdrücken in den zweiten Quelldaten durch Durchführen der Verarbeitung in natürlicher Sprache an den zweiten Quelldaten identifiziert werden;
Erstellen eines Index einer Zählung der positiven Instanzen des Faktors und Synonymen davon;
Durchführen einer Kontextanalyse und einer Stimmungsanalyse an den positiven Instanzen, die für den Faktor identifiziert wurden, der dem Technologieasset entspricht, wobei die Kontextanalyse und die Stimmungsanalyse an den positiven Instanzen durch Durchführen einer Empfindlichkeitsanalyse durch Klassifizieren einer Polarität eines Texts in den Wörtern, Sätzen, Merkmalen, Dokumenten, Ausdrücken durchgeführt werden, um zu bestimmen, ob die ausgedrückte Meinung in dem Text positiv, negativ oder neutral ist, und um emotionale Zustände zu bestimmen;
Erhalten einer Bewertung für den Faktor basierend auf der Kontextanalyse und der Stimmungsanalyse;
Erhalten einer Interpretation von Asseterhebungsergebnissen für die zweite Vielzahl von Faktoren aus der einen oder den mehreren Erhebungen, die der Vielzahl von Technologieassets zugeordnet sind, wobei die Asseterhebungsergebnisse für die zweite Vielzahl von Faktoren durch Analysieren der Asseterhebungsergebnisse unter Verwendung von Verarbeitungstechniken in natürlicher Sprache interpretiert werden, um die relative Relevanz der zweiten Vielzahl von Faktoren und die Meinung von Assetbesitzern über die Wichtigkeit der zweiten Vielzahl von Faktoren zu bestimmen; und
Einstufen des Faktors basierend auf einem Vergleich der Bewertung, die durch die Kontextanalyse und die Stimmungsanalyse erhalten wird, mit der Interpretation von Asseterhebungsergebnissen, wobei das Einstufen des Faktors umfasst:
Bestimmen, ob eine Stimmungsbewertung für den Faktor in der Erhebung höher ist und die Bewertung niedriger ist, dann wird der Stimmung Priorität gegeben und die Bewertung wird basierend auf einem Stimmungsbereich erhöht,
Bestimmen, ob die Stimmungsbewertung für einen beliebigen Faktor die Bewertung widerspiegelt, dann wird die zweite Einstufung basierend auf der Bewertung zugewiesen,
Bestimmen, ob die Stimmung für den Faktor schlecht ist, aber die Bewertung höher ist, dann wird der Stimmungsbewertung Priorität gegeben und die Bewertung wird um den Stimmungsbereich verringert;
Ableiten, über den einen oder die mehreren Hardwareprozessoren, einer Vielzahl von Abbildungsmatrizen, die der Vielzahl von Technologieassets entsprechen, basierend zumindest auf der ersten Rangfolge des ersten Satzes von Faktoren und der zweiten Rangfolge des zweiten Satzes von Faktoren, wobei eine Abbildungsmatrix der Vielzahl von Abbildungsmatrizen, die einem Technologieasset der Vielzahl von Technologieassets entsprechen, eine relative Relevanz des ersten Satzes von Faktoren, die einer Technologiekomponente zugeordnet sind, in Bezug auf den zweiten Satz von Faktoren, die dem Technologieasset zugeordnet sind, angibt, wobei die Vielzahl von Abbildungsmatrizen durch Abbilden der Faktoren aus dem ersten Satz von Faktoren, die mit den Faktoren aus dem zweiten Satz von Faktoren eng übereinstimmen, als hochrangige Faktoren abgeleitet wird, wobei das Ableiten der Vielzahl von Abbildungsmatrizen umfasst:
Empfangen von dritten Quelldaten aus einer dritten Vielzahl von Quellen;
Erhalten einer positiven Angabe einer Verknüpfung zwischen dem ersten Satz von Faktoren und dem zweiten Satz von Faktoren durch Durchführen einer Verarbeitung in natürlicher Sprache der dritten Quelldaten; und
Ableiten der Vielzahl von Abbildungsmatrizen basierend auf der ersten Rangfolge des ersten Satzes von Faktoren, der zweiten Rangfolge des zweiten Satzes von Faktoren und der positiven Angabe der Verknüpfung zwischen dem ersten Satz von Faktoren und dem zweiten Satz von Faktoren;
Zuweisen, mittels des einen oder der mehreren Hardwareprozessoren, einer Abbildungsbewertung zu jedem der Vielzahl von Technologieassets gegenüber jeder Technologiekomponente der Vielzahl von Technologiekomponenten basierend auf der Vielzahl von Abbildungsmatrizen; und
Empfehlen, mittels des einen oder der mehreren Hardwareprozessoren, eines Technologieassets aus der Vielzahl von Technologieassets basierend auf der Abbildungsbewertung, die jedem der Vielzahl von Technologieassets zugewiesen ist.

## Revendications

1. Procédé, mis en oeuvre par processeur (300), pour des recommandations de technologie, le procédé comprenant les étapes ci-dessous consistant à :
identifier une pluralité de composants technologiques correspondant à une pluralité d'actifs technologiques stockés dans un référentiel d'actifs (246), par l'intermédiaire d'un ou plusieurs processeurs matériels (202) (302) ;
affecter, par l'intermédiaire dudit un ou desdits plusieurs processeurs matériels (202), un premier classement à chaque facteur d'un premier ensemble de facteurs correspondant à chaque composant de la pluralité de composants technologiques, sur la base d'un traitement automatique du langage naturel de premières données de sources associées à la pluralité de composants technologiques, les premières données de sources étant obtenues à partir d'une première pluralité de sources (304), dans lequel l'étape d'affectation du premier classement à un facteur parmi le premier ensemble de facteurs, sur la base du traitement automatique du langage naturel des premières données de sources associées à un composant technologique parmi la pluralité de composants technologiques, comprend les étapes ci-dessous consistant à :
identifier des instances positives d'une technologie associée au composant technologique dans les premières données de sources, dans lesquelles les instances positives sont identifiées en extrayant des informations subjectives à partir de mots, d'une phrase, de caractéristiques, de documents et d'expressions dans les premières données de sources, en mettant en oeuvre le traitement automatique du langage naturel sur les premières données de sources ;
créer un index d'un comptage des instances positives du facteur et de leurs synonymes ;
effectuer une analyse de contexte et une analyse de sentiment sur les instances positives identifiées pour le facteur correspondant au composant technologique, dans lesquelles l'analyse de contexte et l'analyse de sentiment sur les instances positives sont effectuées en mettant en oeuvre une analyse de sensibilité en classant une polarité d'un texte dans les mots, la phrase, les caractéristiques, les documents et les expressions, en vue de déterminer si l'opinion exprimée dans le texte est positive, négative ou neutre, et en vue de déterminer des états émotionnels ; et
classer le facteur sur la base de l'analyse de contexte et de l'analyse de sentiment ;
affecter, par l'intermédiaire dudit un ou desdits plusieurs processeurs matériels, un second classement à chaque facteur d'un second ensemble de facteurs correspondant à chaque actif de la pluralité d'actifs technologiques, sur la base d'un traitement automatique du langage naturel de secondes données de sources associées à la pluralité d'actifs technologiques, les secondes données de sources étant obtenues à partir d'une seconde pluralité de sources (306), dans lequel l'étape d'affectation du second classement à un facteur parmi le second ensemble de facteurs sur la base du traitement automatique du langage naturel des secondes données de sources associées à un actif technologique parmi la pluralité d'actifs technologiques, comprend les étapes ci-dessous consistant à :
identifier des instances positives de l'actif technologique dans les secondes données de sources, dans lesquelles les instances positives sont identifiées en extrayant des informations subjectives à partir de mots, d'une phrase, de caractéristiques, de documents et d'expressions dans les secondes données de sources, en mettant en oeuvre le traitement automatique du langage naturel sur les secondes données de sources ;
créer un index d'un comptage des instances positives du facteur et de leurs synonymes ;
effectuer une analyse de contexte et une analyse de sentiment sur les instances positives identifiées pour le facteur correspondant à l'actif technologique, dans lesquelles l'analyse de contexte et l'analyse de sentiment sur les instances positives sont effectuées en mettant en oeuvre une analyse de sensibilité en classant une polarité d'un texte dans les mots, la phrase, les caractéristiques, les documents et les expressions, en vue de déterminer si l'opinion exprimée dans le texte est positive, négative ou neutre, et en vue de déterminer des états émotionnels ;
obtenir un score pour le facteur sur la base de l'analyse de contexte et de l'analyse de sentiment ;
obtenir une interprétation de résultats d'enquêtes associées aux actifs pour la seconde pluralité de facteurs à partir de ladite une ou desdites plusieurs enquêtes associées à la pluralité d'actifs technologiques, dans lesquels les résultats d'enquêtes associées aux actifs pour la seconde pluralité de facteurs sont interprétés en analysant les résultats d'enquêtes associées aux actifs en utilisant des techniques de traitement automatique du langage naturel en vue de déterminer une pertinence relative de la seconde pluralité de facteurs et l'opinion de propriétaires d'actifs sur l'importance de la seconde pluralité de facteurs ; et
classer le facteur sur la base d'une comparaison du score obtenu par l'analyse de contexte et l'analyse de sentiment avec l'interprétation des résultats d'enquêtes associées aux actifs, dans lequel l'étape de classement du facteur inclut les étapes ci-dessous consistant à :
déterminer si un score de sentiment pour le facteur dans le cadre de l'enquête est élevé tandis que le score est faible, auquel cas la priorité est donnée au sentiment et le score est augmenté sur la base d'une gamme de sentiments ;
déterminer si le score de sentiment pour un facteur quelconque reflète le score, auquel cas le second classement est affecté sur la base du score ;
déterminer si le sentiment pour le facteur est faible, tandis que le score est élevé, auquel cas la priorité est donnée au score de sentiment et le score est diminué de la gamme de sentiments ;
dériver, par l'intermédiaire dudit un ou desdits plusieurs processeurs matériels, une pluralité de matrices de mise en correspondance correspondant à la pluralité d'actifs technologiques, sur la base d'au moins le premier classement du premier ensemble de facteurs et le second classement du second ensemble de facteurs, dans laquelle une matrice de mise en correspondance de la pluralité de matrices de mise en correspondance correspondant à un actif technologique de la pluralité d'actifs technologiques est indicative de la pertinence relative du premier ensemble de facteurs associés à un composant technologique par rapport au second ensemble de facteurs associés à l'actif technologique (308), dans laquelle la pluralité de matrices de mise en correspondance est dérivée en mettant en correspondance les facteurs parmi le premier ensemble de facteurs qui correspondent étroitement aux facteurs parmi le second ensemble de facteurs, en tant que des facteurs de rang élevé, dans lequel l'étape de dérivation de la pluralité de matrices de mise en correspondance comprend les étapes ci-dessous consistant à :
recevoir des troisièmes données de sources en provenance d'une troisième pluralité de sources ;
obtenir une indication positive d'un lien entre le premier ensemble de facteurs et le second ensemble de facteurs, en mettant en oeuvre un traitement automatique du langage naturel des troisièmes données de sources ; et
dériver la pluralité de matrices de mise en correspondance sur la base du premier classement du premier ensemble de facteurs, du second classement du second ensemble de facteurs, et de l'indication positive du lien entre le premier ensemble de facteurs et le second ensemble de facteurs ;
affecter, par l'intermédiaire dudit un ou desdits plusieurs processeurs matériels, un score de mise en correspondance à chaque actif de la pluralité d'actifs technologiques par rapport à chaque composant technologique de la pluralité de composants technologiques sur la base de la pluralité de matrices de mise en correspondance (310) ; et
recommander, par l'intermédiaire dudit un ou desdits plusieurs processeurs matériels, un actif technologique parmi la pluralité d'actifs technologiques, sur la base du score de mise en correspondance affecté à chaque actif de la pluralité d'actifs technologiques (312).

2. Procédé selon la revendication 1, dans lequel le premier ensemble de facteurs comprend un facteur de subsistance, un facteur d'usage commun, un facteur de disponibilité de ressources, un facteur de performance, un facteur de sécurité, un facteur d'intelligence artificielle (IA), un facteur infonuagique, un facteur de mégadonnées et un facteur d'automatisation.

3. Procédé selon la revendication 1, dans lequel la première pluralité de sources comprend des données d'enquêtes obtenues à partir d'une ou plusieurs enquêtes, des données de médias sociaux, des rapports d'analystes et des données d'incidents obtenues correspondant au premier ensemble de facteurs.

4. Procédé selon la revendication 1, dans lequel le second ensemble de facteurs comprend un facteur de criticité de mission, un facteur de performance, un facteur de sécurité, un facteur de confidentialité des données, un facteur de maintenabilité, un facteur d'intelligence artificielle (IA), un facteur infonuagique, un facteur de mégadonnées et un facteur d'automatisation.

5. Procédé selon la revendication 1, dans lequel la seconde pluralité de sources comprend une documentation d'information associée à la pluralité d'actifs technologiques, des rapports de sécurité de propriété intellectuelle associés à la pluralité d'actifs technologiques, des données de médias sociaux, et une ou plusieurs enquêtes associées à la pluralité d'actifs technologiques.

6. Système (200) pour des recommandations de technologie, comprenant :
une ou plusieurs mémoires (204) ; et
un ou plusieurs processeurs matériels (202), ladite une ou lesdites plusieurs mémoires (204) étant couplées audit un ou auxdits plusieurs processeurs matériels (202), dans lequel ledit un ou lesdits plusieurs processeurs matériels (202) sont configurés de manière à exécuter des instructions programmées stockées dans ladite une ou lesdites plusieurs mémoires (204) pour :
identifier une pluralité de composants technologiques correspondant à une pluralité d'actifs technologiques stockés dans un référentiel d'actifs (246) ;
affecter un premier classement à chaque facteur d'un premier ensemble de facteurs correspondant à chaque composant de la pluralité de composants technologiques, sur la base d'un traitement automatique du langage naturel de premières données de sources associées à la pluralité de composants technologiques, les premières données de sources étant obtenues à partir d'une première pluralité de sources, dans lequel l'étape d'affectation du premier classement à un facteur parmi le premier ensemble de facteurs, sur la base du traitement automatique du langage naturel des premières données de sources associées à un composant technologique parmi la pluralité de composants technologiques, comprend les étapes ci-dessous consistant à :
identifier des instances positives d'une technologie associée au composant technologique dans les premières données de sources, dans lesquelles les instances positives sont identifiées en extrayant des informations subjectives à partir de mots, d'une phrase, de caractéristiques, de documents et d'expressions dans les premières données de sources, en mettant en oeuvre le traitement automatique du langage naturel sur les premières données de sources ;
créer un index d'un comptage des instances positives du facteur et de leurs synonymes ;
effectuer une analyse de contexte et une analyse de sentiment sur les instances positives identifiées pour le facteur correspondant au composant technologique, dans lesquelles l'analyse de contexte et l'analyse de sentiment sur les instances positives sont effectuées en mettant en oeuvre une analyse de sensibilité en classant une polarité d'un texte dans les mots, la phrase, les caractéristiques, les documents et les expressions, en vue de déterminer si l'opinion exprimée dans le texte est positive, négative ou neutre, et en vue de déterminer des états émotionnels ; et
classer le facteur sur la base de l'analyse de contexte et de l'analyse de sentiment ;
affecter un second classement à chaque facteur d'un second ensemble de facteurs correspondant à chaque actif de la pluralité d'actifs technologiques, sur la base d'un traitement automatique du langage naturel de secondes données de sources associées à la pluralité d'actifs technologiques, les secondes données de sources étant obtenues à partir d'une seconde pluralité de sources, dans lequel l'étape d'affectation du second classement à un facteur parmi le second ensemble de facteurs sur la base du traitement automatique du langage naturel des secondes données de sources associées à un actif technologique parmi la pluralité d'actifs technologiques, comprend les étapes ci-dessous consistant à :
identifier des instances positives de l'actif technologique dans les secondes données de sources, dans lesquelles les instances positives sont identifiées en extrayant des informations subjectives à partir de mots, d'une phrase, de caractéristiques, de documents et d'expressions dans les secondes données de sources, en mettant en oeuvre le traitement automatique du langage naturel sur les secondes données de sources ;
créer un index d'un comptage des instances positives du facteur et de leurs synonymes ;
effectuer une analyse de contexte et une analyse de sentiment sur les instances positives identifiées pour le facteur correspondant à l'actif technologique, dans lesquelles l'analyse de contexte et l'analyse de sentiment sur les instances positives sont effectuées en mettant en oeuvre une analyse de sensibilité en classant une polarité d'un texte dans les mots, la phrase, les caractéristiques, les documents et les expressions, en vue de déterminer si l'opinion exprimée dans le texte est positive, négative ou neutre, et en vue de déterminer des états émotionnels ;
obtenir un score pour le facteur sur la base de l'analyse de contexte et de l'analyse de sentiment ;
obtenir une interprétation de résultats d'enquêtes associées aux actifs pour la seconde pluralité de facteurs à partir de ladite une ou desdites plusieurs enquêtes associées à la pluralité d'actifs technologiques, dans lesquels les résultats d'enquêtes associées aux actifs pour la seconde pluralité de facteurs sont interprétés en analysant les résultats d'enquêtes associées aux actifs en utilisant des techniques de traitement automatique du langage naturel en vue de déterminer une pertinence relative de la seconde pluralité de facteurs et l'opinion de propriétaires d'actifs sur l'importance de la seconde pluralité de facteurs ; et
classer le facteur sur la base d'une comparaison du score obtenu par l'analyse de contexte et l'analyse de sentiment avec l'interprétation des résultats d'enquêtes associées aux actifs, dans lequel l'étape de classement du facteur inclut les étapes ci-dessous consistant à :
déterminer si un score de sentiment pour le facteur dans le cadre de l'enquête est élevé tandis que le score est faible, auquel cas la priorité est donnée au sentiment et le score est augmenté sur la base d'une gamme de sentiments ;
déterminer si le score de sentiment pour un facteur quelconque reflète le score, auquel cas le second classement est affecté sur la base du score ;
déterminer si le sentiment pour le facteur est faible, tandis que le score est élevé, auquel cas la priorité est donnée au score de sentiment et le score est diminué de la gamme de sentiments ;
dériver une pluralité de matrices de mise en correspondance correspondant à la pluralité d'actifs technologiques, sur la base d'au moins le premier classement du premier ensemble de facteurs et le second classement du second ensemble de facteurs, dans laquelle une matrice de mise en correspondance de la pluralité de matrices de mise en correspondance correspondant à un actif technologique de la pluralité d'actifs technologiques est indicative de la pertinence relative du premier ensemble de facteurs associés à un composant technologique par rapport au second ensemble de facteurs associés à l'actif technologique, dans laquelle la pluralité de matrices de mise en correspondance est dérivée en mettant en correspondance les facteurs parmi le premier ensemble de facteurs qui correspondent étroitement aux facteurs parmi le second ensemble de facteurs, en tant que des facteurs de rang élevé, dans lequel l'étape de dérivation de la pluralité de matrices de mise en correspondance comprend les étapes ci-dessous consistant à :
recevoir des troisièmes données de sources en provenance d'une troisième pluralité de sources ;
obtenir une indication positive d'un lien entre le premier ensemble de facteurs et le second ensemble de facteurs, en mettant en oeuvre un traitement automatique du langage naturel des troisièmes données de sources ; et
dériver la pluralité de matrices de mise en correspondance sur la base du premier classement du premier ensemble de facteurs, du second classement du second ensemble de facteurs, et de l'indication positive du lien entre le premier ensemble de facteurs et le second ensemble de facteurs ;
affecter un score de mise en correspondance à chaque actif de la pluralité d'actifs technologiques par rapport à chaque composant technologique de la pluralité de composants technologiques sur la base de la pluralité de matrices de mise en correspondance ; et
recommander un actif technologique parmi la pluralité d'actifs technologiques, sur la base du score de mise en correspondance affecté à chaque actif de la pluralité d'actifs technologiques.

7. Système selon la revendication 6, dans lequel le premier ensemble de facteurs comprend un facteur de subsistance, un facteur d'usage commun, un facteur de disponibilité de ressources, un facteur de performance, un facteur de sécurité, un facteur d'intelligence artificielle (IA), un facteur infonuagique, un facteur de mégadonnées et un facteur d'automatisation.

8. Système selon la revendication 6, dans lequel la première pluralité de sources comprend des données d'enquêtes obtenues à partir d'une ou plusieurs enquêtes, des données de médias sociaux, des rapports d'analystes et des données d'incidents obtenues correspondant au premier ensemble de facteurs.

9. Système selon la revendication 6, dans lequel le second ensemble de facteurs comprend un facteur de criticité de mission, un facteur de performance, un facteur de sécurité, un facteur de confidentialité des données, un facteur de maintenabilité, un facteur d'intelligence artificielle (IA), un facteur infonuagique, un facteur de mégadonnées et un facteur d'automatisation.

10. Système selon la revendication 6, dans lequel la seconde pluralité de sources comprend une documentation d'information associée à la pluralité d'actifs technologiques, des rapports de sécurité de propriété intellectuelle associés à la pluralité d'actifs technologiques, des données de médias sociaux, et une ou plusieurs enquêtes associées à la pluralité d'actifs technologiques.

11. Un ou plusieurs supports non transitoires de stockage d'informations lisibles par machine comprenant une ou plusieurs instructions qui, lorsqu'elles sont exécutées par un ou plusieurs processeurs matériels, occasionnent la mise en oeuvre des étapes ci-dessous consistant à :
identifier une pluralité de composants technologiques correspondant à une pluralité d'actifs technologiques stockés dans un référentiel d'actifs, par l'intermédiaire d'un ou plusieurs processeurs matériels ;
affecter, par l'intermédiaire dudit un ou desdits plusieurs processeurs matériels, un premier classement à chaque facteur d'un premier ensemble de facteurs correspondant à chaque composant de la pluralité de composants technologiques, sur la base d'un traitement automatique du langage naturel de premières données de sources associées à la pluralité de composants technologiques, les premières données de sources étant obtenues à partir d'une première pluralité de sources, dans lequel l'étape d'affectation du premier classement à un facteur parmi le premier ensemble de facteurs, sur la base du traitement automatique du langage naturel des premières données de sources associées à un composant technologique parmi la pluralité de composants technologiques, comprend les étapes ci-dessous consistant à :
identifier des instances positives d'une technologie associée au composant technologique dans les premières données de sources, dans lesquelles les instances positives sont identifiées en extrayant des informations subjectives à partir de mots, d'une phrase, de caractéristiques, de documents et d'expressions dans les premières données de sources, en mettant en oeuvre le traitement automatique du langage naturel sur les premières données de sources ;
créer un index d'un comptage des instances positives du facteur et de leurs synonymes ;
effectuer une analyse de contexte et une analyse de sentiment sur les instances positives identifiées pour le facteur correspondant au composant technologique, dans lesquelles l'analyse de contexte et l'analyse de sentiment sur les instances positives sont effectuées en mettant en oeuvre une analyse de sensibilité en classant une polarité d'un texte dans les mots, la phrase, les caractéristiques, les documents et les expressions, en vue de déterminer si l'opinion exprimée dans le texte est positive, négative ou neutre, et en vue de déterminer des états émotionnels ; et
classer le facteur sur la base de l'analyse de contexte et de l'analyse de sentiment ;
affecter, par l'intermédiaire dudit un ou desdits plusieurs processeurs matériels, un second classement à chaque facteur d'un second ensemble de facteurs correspondant à chaque actif de la pluralité d'actifs technologiques, sur la base d'un traitement automatique du langage naturel de secondes données de sources associées à la pluralité d'actifs technologiques, les secondes données de sources étant obtenues à partir d'une seconde pluralité de sources, dans lequel l'étape d'affectation du second classement à un facteur parmi le second ensemble de facteurs sur la base du traitement automatique du langage naturel des secondes données de sources associées à un actif technologique parmi la pluralité d'actifs technologiques, comprend les étapes ci-dessous consistant à :
identifier des instances positives de l'actif technologique dans les secondes données de sources, dans lesquelles les instances positives sont identifiées en extrayant des informations subjectives à partir de mots, d'une phrase, de caractéristiques, de documents et d'expressions dans les secondes données de sources, en mettant en oeuvre le traitement automatique du langage naturel sur les secondes données de sources ;
créer un index d'un comptage des instances positives du facteur et de leurs synonymes ;
effectuer une analyse de contexte et une analyse de sentiment sur les instances positives identifiées pour le facteur correspondant à l'actif technologique, dans lesquelles l'analyse de contexte et l'analyse de sentiment sur les instances positives sont effectuées en mettant en oeuvre une analyse de sensibilité en classant une polarité d'un texte dans les mots, la phrase, les caractéristiques, les documents et les expressions, en vue de déterminer si l'opinion exprimée dans le texte est positive, négative ou neutre, et en vue de déterminer des états émotionnels ;
obtenir un score pour le facteur sur la base de l'analyse de contexte et de l'analyse de sentiment ;
obtenir une interprétation de résultats d'enquêtes associées aux actifs pour la seconde pluralité de facteurs à partir de ladite une ou desdites plusieurs enquêtes associées à la pluralité d'actifs technologiques, dans lesquels les résultats d'enquêtes associées aux actifs pour la seconde pluralité de facteurs sont interprétés en analysant les résultats d'enquêtes associées aux actifs en utilisant des techniques de traitement automatique du langage naturel en vue de déterminer une pertinence relative de la seconde pluralité de facteurs et l'opinion de propriétaires d'actifs sur l'importance de la seconde pluralité de facteurs ; et
classer le facteur sur la base d'une comparaison du score obtenu par l'analyse de contexte et l'analyse de sentiment avec l'interprétation des résultats d'enquêtes associées aux actifs, dans lequel l'étape de classement du facteur inclut les étapes ci-dessous consistant à :
déterminer si un score de sentiment pour le facteur dans le cadre de l'enquête est élevé tandis que le score est faible, auquel cas la priorité est donnée au sentiment et le score est augmenté sur la base d'une gamme de sentiments ;
déterminer si le score de sentiment pour un facteur quelconque reflète le score, auquel cas le second classement est affecté sur la base du score ;
déterminer si le sentiment pour le facteur est faible, tandis que le score est élevé, auquel cas la priorité est donnée au score de sentiment et le score est diminué de la gamme de sentiments ;
dériver, par l'intermédiaire dudit un ou desdits plusieurs processeurs matériels, une pluralité de matrices de mise en correspondance correspondant à la pluralité d'actifs technologiques, sur la base d'au moins le premier classement du premier ensemble de facteurs et le second classement du second ensemble de facteurs, dans laquelle une matrice de mise en correspondance de la pluralité de matrices de mise en correspondance correspondant à un actif technologique de la pluralité d'actifs technologiques est indicative de la pertinence relative du premier ensemble de facteurs associés à un composant technologique par rapport au second ensemble de facteurs associés à l'actif technologique, dans laquelle la pluralité de matrices de mise en correspondance est dérivée en mettant en correspondance les facteurs parmi le premier ensemble de facteurs qui correspondent étroitement aux facteurs parmi le second ensemble de facteurs, en tant que des facteurs de rang élevé, dans lequel l'étape de dérivation de la pluralité de matrices de mise en correspondance comprend les étapes ci-dessous consistant à :
recevoir des troisièmes données de sources en provenance d'une troisième pluralité de sources ;
obtenir une indication positive d'un lien entre le premier ensemble de facteurs et le second ensemble de facteurs, en mettant en oeuvre un traitement automatique du langage naturel des troisièmes données de sources ; et
dériver la pluralité de matrices de mise en correspondance sur la base du premier classement du premier ensemble de facteurs, du second classement du second ensemble de facteurs, et de l'indication positive du lien entre le premier ensemble de facteurs et le second ensemble de facteurs ;
affecter, par l'intermédiaire dudit un ou desdits plusieurs processeurs matériels, un score de mise en correspondance à chaque actif de la pluralité d'actifs technologiques par rapport à chaque composant technologique de la pluralité de composants technologiques sur la base de la pluralité de matrices de mise en correspondance ; et
recommander, par l'intermédiaire dudit un ou desdits plusieurs processeurs matériels, un actif technologique parmi la pluralité d'actifs technologiques, sur la base du score de mise en correspondance affecté à chaque actif de la pluralité d'actifs technologiques.
